# EUROPÄISCHE PATENTSCHRIFT

(11) **EP 1 298 274 B1**
(45) Veröffentlichungstag und Bekanntmachung des Hinweises auf die Patenterteilung: **30.11.2005**
(21) Anmeldenummer: 02021770.9
(22) Anmeldetag: 26.09.2002
(51) Int. Cl.: E05F 15/12

(54) **Flügeltürantrieb mit Federschliessung**
Doorwing drive system with spring closing means
Mécanisme d'entraînement de portes à battants avec dipositif de fermeture à ressort

(30) Priorität: 29.09.2001 DE 10148293
(43) Veröffentlichungstag der Anmeldung: 02.04.2003
(73) Patentinhaber: Landert-Motoren-AG, 8180 Bülach (CH)
(72) Erfinder: Brennwald, Daniel, 8173 Neerach (CH)
(74) Vertreter: Riebling, Peter

(56) Entgegenhaltungen:
- EP-A- 0 450 538
- EP-A- 0 505 134
- WO-A-98/19014
- DE-A- 3 513 666
- DE-A- 19 519 948
- FR-A- 2 685 048
- US-A- 4 333 270
- US-A- 4 434 578
- US-A- 4 666 026

## Beschreibung

Gegenstand der Erfindung ist ein Flügeltürantrieb mit Federschliessung nach dem Oberbegriff des Patentanspruchs 1.

Üblicherweise besteht der Aufbau eines Flügeltürantriebs aus einem Elektromotor mit mehreren Übersetzungsstufen bis hin zur Abtriebswelle. Diese Vorgelege sind Riemen, Zahnradsätze oder deren Kombination. Üblich sind auch hydraulische Getriebeeinheiten, bei denen ein verzahnter Kolben das Abtriebsritzel treibt. Die Übertragung des Drehmomentes von der Abtriebswelle auf die Türe erfolgt meistens über ein Gestänge. Die Tür-Öffnung erfolgt motorisch, die Schliessung über eine Feder. Es sind aber auch Geräte bekannt, die ohne Feder gebaut sind und auch die Schliessbewegung motorisch ausführen.

Die Geräte ohne Federschliessung bauen zwar sehr schmal in der Ansicht, sind aber im stromlosen Zustand nicht brauchbar, wogegen die Geräte mit Federschliessung die Funktion eines Türschliessers übernehmen. Durch die prinzipbedingten Eigenheiten bauen die Geräte mit Federschliessung jedoch breit (Platz für Getriebestufen und Feder. Es funktioniert nicht jede Getriebeart, denn die Feder muss das Getriebe mit dem Motor zurückdrehen können). Hydraulische Einheiten sind teuer und laut.

Üblicherweise werden derartige Flügeltürantriebe im Sturzbereich über der Tür oder auf dem Türblatt eingebaut. Hierbei kommt es entscheidend darauf an, dass in der Frontansicht (in der Ansicht auf die Tür) das Gehäuse des Flügeltürantriebs eine möglichst niedrige Höhe aufweist. Dies gewährleistet, dass der Flügeltürantrieb auch bei beengten Raumverhältnissen eingebaut werden kann. Darüber hinaus ergibt sich auch ein optisch günstiger Eindruck, wenn eine sehr schmale Antriebseinheit in dem Türsturz oder auf dem Türblatt montiert werden kann.

Die FR 2 685 048 A offenbart einen Flügeltürantrieb, wobei eine Flügeltür mittels Elektromotor geöffnet wird, und auf einer drehend angetriebenen Spindel eine Spindelmutter mit Zahnstange axial verschiebbar geführt ist, und die Zahnstange mit einem Ritzel kämmt, welches seinerseits drehfest mit einem Antriebsgestänge für die Flügeltür verbunden ist. Die Spindel wird direkt angetrieben, so dass der Motor in der Verlängerung der Spindel vorgesehen ist, was mehr Platz benötigt, als parallel versetzte Achsen von Spindel und Motor. Auch ist keine Rückstellfeder zum Rückfahren der Spindel und damit zur Schliessung des Türflügels vorgesehen. Weiterhin ist die Zahnstange in einem 2-teiligen Zylinder geführt, der mit Abschlussdeckeln verschlossen ist, was ebenfalls mehr Platz benötigt. Es sind auch zwei Gewindemuttem beschrieben, die fest miteinander verbünden sind, was wiederum mehr Platz benötigt.

Der Erfindung liegt deshalb die Aufgabe zugrunde, einen Flügeltürantrieb mit Federschliessung der eingangs genannten Art so weiterzubilden, dass der gesamte Bauraum für den Flügeltürantrieb sowie die frontseitig in der Tür sichtbare Höhe und Breite des Antriebs möglichst klein gehalten sind.

Zur Lösung der gestellten Aufgabe ist die Erfindung dadurch gekennzeichnet, dass die Flügeltür mittels Motor geöffnet und mittels Federkraft eines Federspeichers geschlossen wird, wobei auf einer drehend angetriebenen Kugelumlaufspindel eine Zahnstange axial verschiebbar geführt ist, die gegen die Last eines Federspeichers arbeitet und dass die Zahnstange mit einem Ritzel kämmt, welches seinerseits drehfest mit einem Antriebsgestänge für den Flügeltürantrieb verbunden ist, und wobei der Federspeicher unmittelbar die Kugelumlaufspindel umgibt und wobei der Motor versetzt neben der Kugelumlaufspindel angeordnet ist.

Mit der gegebenen technischen Lehre ergibt sich der wesentliche Vorteil, dass es nun erstmals möglich ist, auf kleinstem Raum ein sehr großes Untersetzungsverhältnis von der Motordrehzahl auf eine entsprechende untersetzte Drehzahl für den Antrieb der Flügeltür zu erreichen. Erfindungsgemäss werden Untersetzungsverhältnisse im Bereich von 70:1 bis zu 100:1 erreicht. Dies sind nur beispielhafte Angaben, um zu dokumentieren, dass eine sehr große Untersetzung auf kleinstem Raum erreicht wird. Selbstverständlich sind diese Angaben nicht begrenzend für die Erfindung zu verstehen. Es können auch Untersetzungsverhältnisse von 150:1 oder dergleichen erreicht werden.

Wesentliches Merkmal der Erfindung ist jedenfalls, dass eine leicht laufende und aufgrund ihrer Konstruktion reibungsarme Kugelumlaufspindel verwendet wird.

Kennzeichnend für diese Art der Konstruktion ist, dass zur Reibungsverminderung zwischen der Gewindespindel und der Gewindemutter Kugelumlaufbahnen angeordnet sind, die mit entsprechenden Kugeln gefüllt sind. Auf diese Weise ist es möglich, die Kugelumlaufspindel besonders reibungsarm zu betreiben. Es ist nun erfindungsgemäß vorgesehen, dass die Gewindemutter mit einer Zahnstange verbunden ist, so dass die gesamte Anordnung aus Gewindemutter und Zahnstange axial verschiebbar - aber nicht verdrehbar - auf der Gewindespindel gelagert ist.

Wenn nun - wie erfindungsgemäss vorgesehen - die Gewindemutter auf einen Federspeicher arbeitet, ergibt sich damit der Vorteil, dass bei der Verschiebung der Gewindemutter in der einen Richtung der Federspeicher entsprechend aufgeladen wird. Sollte in diesem Zustand der Motor ausfallen, dann reicht die Kraft der Feder aus, bei stromlosem Motor die Gewindemutter wieder in ihre ursprüngliche Ausgangslage bei entspanntem Federspeicher zu bringen.

Dies gewährleistet, dass der Flügeltürantrieb auch bei Ausfall des Stromes selbsttätig zum Beispiel in seine Schliess-Stellung übergeht. Auch bei Ausfall des Stromes ist es möglich, dass die Tür über Angreifen an der Flügeltür geöffnet wird, weil dann ebenfalls über das Drehmoment an dem Ritzel die Zahnstange bewegt wird und aufgrund der geringen Reibung der Spindelmutter auf der Kugelgewindespindel diese Kugelgewindespindel sich dann selbsttätig dreht. Damit wird der Federspeicher wieder aufgeladen, auch wenn der Antrieb stromlos ist.

Es hat sich nun herausgestellt, dass die Verwendung einer reibungsarmen Kugelumlaufspindel optimal für die Erreichung einer minimalen Höhe des Antriebs insgesamt ist. Dies daher, weil die Kugelumlaufspindel ein sehr großes Untersetzungsverhältnis von z.B. 30:1 aufweist.

Weiterer Vorteil der Verwendung der Kugelumlaufspindel ist der reibungsarme Lauf, so dass die Möglichkeit besteht, dass auch von der abgetriebenen Seite entsprechend auf die Zahnstange eingetragene Kräfte zu einem Drehantrieb der Kugelumlaufspindel führen.

Nach einer weiteren Ausgestaltung der Erfindung wird auch die Länge des Antriebes der Gestalt verkleinert, so dass der Antriebsmotor nicht in axialer Verlängerung unmittelbar mit der Kugelgewindespindel verbunden ist, sondern der Antriebsmotor ist versetzt neben der Kugelgewindespindel angeordnet und treibt diese über ein Untersetzungsgetriebe an.

Neben dem direkten Anflanschen des Elektromotors wird der Antrieb der Kugelgewindespindel über ein entsprechendes Getriebe bevorzugt. Es handelt sich dabei um einen einfachen untersetzenden Riementrieb, wobei z.B. ein Untersetzungsverhältnis von 3:1 verwendet werden kann.

Statt des hier dargestellten Riemengetriebes können selbstverständlich auch andere Getriebe verwendet werden, wie z.B. reine Zahnradgetriebe, Planetengetriebe und dergleichen mehr.

Ebenso sind bekannte Reibradgetriebe möglich.
Statt der hier erwähnten Kugelgewindespindel mit für mehrere Kugeln vorgesehene Umlaufbahnen, die mit entsprechenden Umlaufbahnen in der Spindelmutter zusammenwirken, können auch Trapezspindeln verwendet werden. Derartige Trapezspindeln haben am Aussenumfang ein Trapezgewinde, welches mit einem entsprechenden Trapez-Innengewinde an der Spindelmutter kämmt.

Als Federspeicher wird bevorzugt, wenn eine Schraubendruckfeder verwendet wird. Eine solche Schraubendruckfeder hat sich wegen des langen Verschiebeweges bewährt. Es ist deshalb auch eine Federführung vorhanden, die ein Ausknicken der Schraubendruckfeder verhindert. Ein bevorzugter Verschiebeweg beträgt z.B. 75 mm. Die Feder hat hierbei dann eine Länge von 260 mm im vorgespannten Zustand, jedoch in der Ruhelage des Antriebes.

Statt eines Federspeichers aus einer Schraubendruckfeder können selbstverständlich auch andere Federspeicher verwendet werden, wie z.B. Zugfedern, Drehfedern, Schenkelfedern, Gasdruckfedern und dergleichen mehr.

Der Vorteil der verwendeten Schraubendruckfeder ist, dass diese unmittelbar die Kugelgewindespindel umgibt und an ihrem einen Ende mit der auf der einen Seite der Kugelgewindespindel angeordneten Spindelmutter anliegt, während das andere Ende an einem gehäusefesten Lagerbock aufliegt. Damit wird auf geringster Länge eine relativ hohe Federkraft erzeugt und durch die Anordnung der Schraubendruckfeder unmittelbar auf der Kugelgewindespindel wird deshalb auch eine sehr geringe Gehäuselänge erreicht.

Die Kraftwirkung der Feder zur Schließung oder Zuhaltung der Türe kann selbstverständlich auch durch Zuschalten des Elektromotors verstärkt werden.

Die Erfindung ist nicht auf die Verwendung einer einzigen Kugelgewindespindel beschränkt. Es können auch zwei parallel nebeneinander arbeitende und synchron von einem einzigen Motor angetriebene Kugelgewindespindeln verwendet werden.

Ebenso ist es möglich, die in den Zeichnungen dargestellte Anordnung zu spiegeln, um beispielsweise mit der rechten Antriebsanordnung den rechten Türflügel und mit der linken Antriebsanordnung den linken Türflügel anzutreiben. Auch diese Möglichkeit soll von der Erfindung umfasst sein.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch einen Flügeltürantrieb nach der Erfindung,
- Figur 2:: Draufsicht auf die Anordnung nach Figur 1,
- Figur 3:: Stirnansicht der Anordnung nach Figur 1 in Pfeilrichtung III,
- Figur 4:: Schnitt durch eine Spindelmutter und eine Kugelgewindespindel in schematisierter Darstellung.

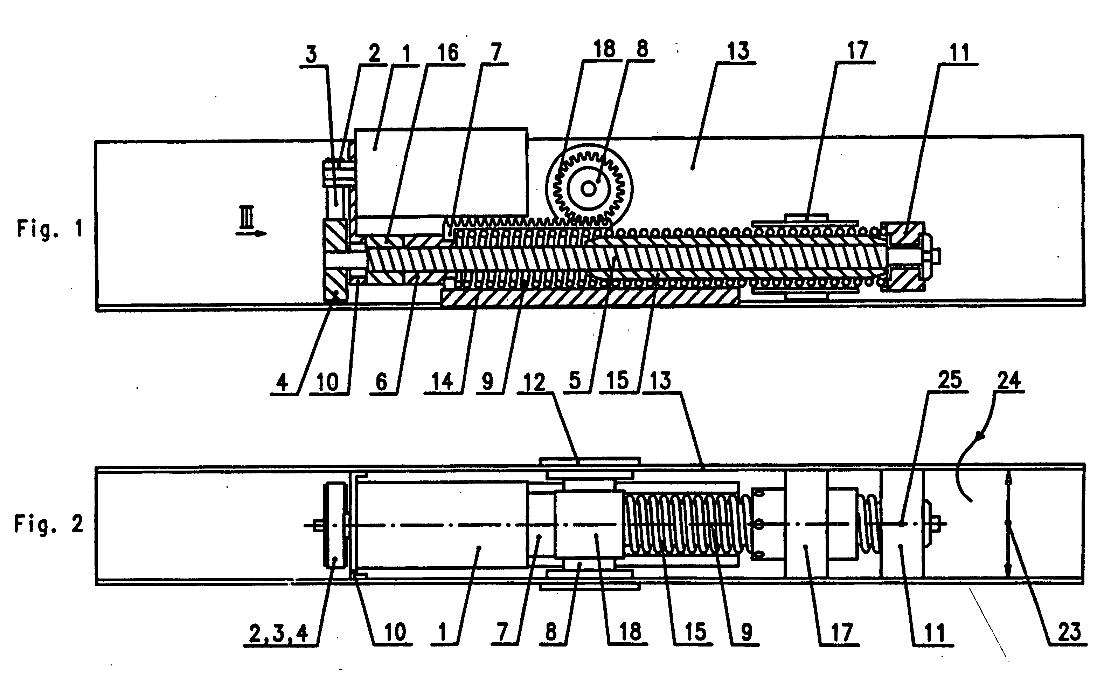

Gemäss Figuren 1 und 2 besteht der Flügeltürantrieb aus einem etwa U-förmig gebogenen Gehäuseprofil 13, dessen U-Schenkel parallel und in gegenseitigem Abstand zueinander angeordnet sind.

In das nach oben offene Gehäuseprofil 13 ist der gesamte Antrieb integriert. Er besteht im Wesentlichen aus einem Elektromotor 1, dessen Längsachse parallel zur Längsachse des gesamten Gehäuseprofils 13 verläuft.

Die Abtriebswelle des Elektromotors 1 ist drehfest mit einem Motorritzel 2 verbunden, über das ein Rippenband 3 läuft, das seinerseits über ein Vorgelegerad 4 geschlungen ist.

Das Vorgelegerad 4 ist drehfest mit dem einen Ende einer Kugelgewindespindel 5 verbunden, deren anderes, gegenüber liegendes Ende in einem gehäusefesten Lagerflansch 11 drehbar aufgenommen ist.

Auf der Kugelgewindespindel 5 ist drehbar eine Spindelmutter 6 gelagert. Diese ist wiederum fest mit einer Zahnstange 7 verbunden, die etwa U-förmig ausgebildet ist.

Der Basisschenkel der U-förmigen Zahnstange 7 ist im Schnitt in Figur 1 zu sehen. Die Seitenschenkel der U-förmigen Zahnstange 7 greifen rechts und links an der Kugelgewindespindel 5 vorbei und bilden Verdrehanschläge, die mit einer zugeordneten Zahnstangenführung 14 zusammenwirken.

Die Zahnstangenführung 14 ist ein Kunststoffteil, welches auf dem Basisschenkel des Gehäuseprofils 13 innen angeordnet ist, und welches die Verdrehanschläge für die Seitenschenkel der U-förmigen Zahnstange 7 bildet.

Die jeweilige Stirnseite des Seitenschenkels der Zahnstange 7 liegt dabei auf der Oberfläche der Zahnstangenführung 14 auf. Damit wird der Vorteil erreicht, dass bei einer entsprechenden Durchbiegung der Zahnstange 7 die Seitenschenkel auf der Zahnstangenführung 14 aufliegen und hiermit eine Sicherung gegen Durchbiegen der relativ lang ausgebildeten Kugelgewindespindel 5 gewährleistet ist. Dies ist also durch die U-förmig profilierte Zahnstange 7 und durch die Zahnstangenführung 14 gegen Durchbiegung geschützt.

Der Basisschenkel der U-förmig profilierten Zahnstange 7 kämmt mit einem Ritzel 18, welches drehfest mit einer Abtriebswelle 8 verbunden ist. Die Abtriebswelle 8 ist drehfest mit nicht näher dargestellten Schwenkarmen verbunden.

Es ist also ein Schwenkarmgestänge vorhanden, dessen schwenkbarer Teil drehfest mit der Abtriebswelle 8 verbunden ist. Dieses Schwenkarmgestänge betätigt die Flügeltür.

Wichtig ist nun, dass die Zahnstange 7 gegen einen Federspeicher arbeitet. Im gezeigten Ausführungsbeispiel besteht der Federspeicher aus einer Feder 9, die als Schraubendruckfeder ausgebildet ist. Deren eines Ende stützt sich an einem entsprechenden radial einwärts verlängerten Flansch an der Zahnstange 7 an, während das andere Ende an einem gehäusefesten Lagerflansch 11 anliegt.

Die Feder 9 wird bereits schon in vorgespanntem Zustand in der in Figur 1 dargestellten Lage eingebaut und hat deshalb bereits schon in dieser Lage eine Federvorspannung auf die Zahnstange 7.

Der Elektromotor 1 ist in einem Motorflansch 10 im Gehäuseprofil 13 befestigt. Im Bereich dieses Motorflansches 10 ist die Drehlagerung für die Kugelgewindespindel 5 aufgenommen.

Die Abtriebswelle 8 mit ihrem Ritzel 18 ist in einem Flansch 12 im Gehäuseprofil 13 aufgenommen, wobei im Flansch 12 das Kugellager für die Drehlagerung der Abtriebswelle 8 angeordnet ist.

Zum Schutz gegen Ausknicken der Feder 9 ist eine Federführung 15 vorgesehen. Diese besteht aus einem hülsenförmigen Kunststoffteil, welches die Kugelgewindespindel 5 am Aussenumfang umgibt und welches die Feder 9 mindestens teilweise trägt.

Damit ist die Feder insbesondere gegen Ausknicken im Bereich hinter der Zahnstangenführung 14 und vor dem Lagerflansch 11 geschützt.

Es sind ferner mechanische Anschläge vorhanden, wobei im hinteren Bereich ein Anschlag 16 den geschlossenen Zustand des Flügeltürantriebes kennzeichnet, während am Gehäuse im Abstand davon ein Anschlag 17 vorhanden ist, an den dann die Zahnstange 7 im offenen Zustand der Flügeltür anschlägt.

Selbstverständlich sind noch elektrische Drehgeber oder Wegmessanordnungen vorhanden, die auch die entsprechende Bewegung der Zahnstange 7 in entsprechende elektrische Signale umwandeln und der Steuerung als Positionssignal mitteilen.

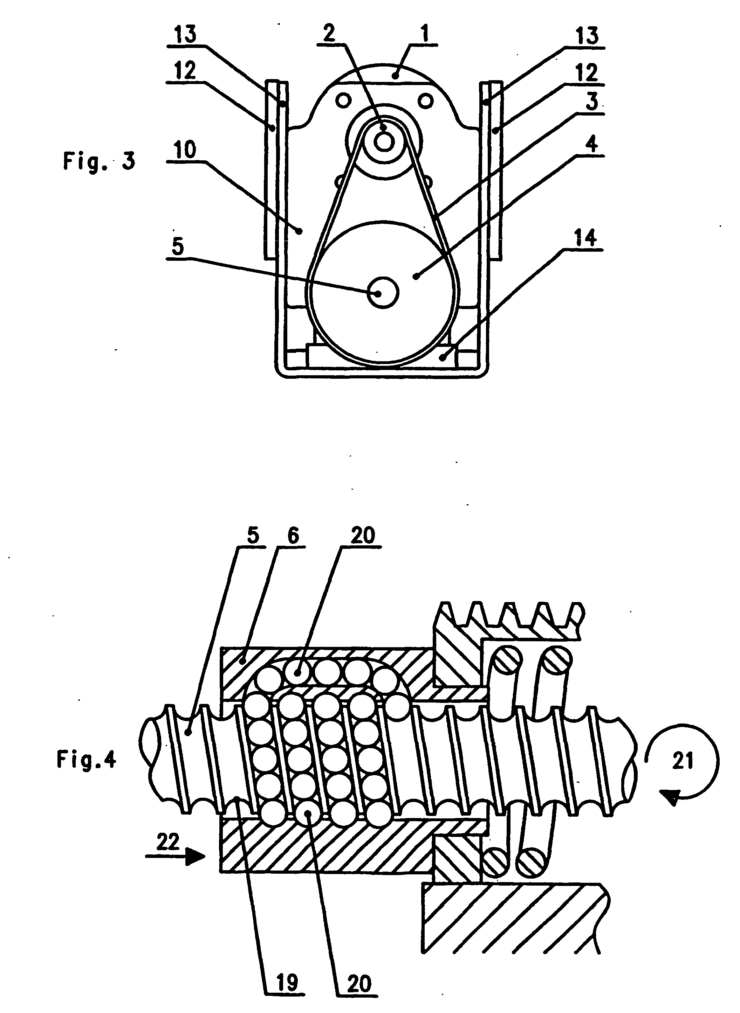

Wenn sich demgemäss beispielsweise die Kugelgewindespindel 5 in Figur 4 in Pfeilrichtung 21 dreht, wird die Spindelmutter 6 in Pfeilrichtung 22 bewegt.

Hierbei laufen die Kugeln 20 in schräg zur Pfeilrichtung 22 angeordneten Kugelbahnen 19 auf dem Aussenumfang der Kugelgewindespindel 5 um und greifen hierbei in zugeordnete, gleich ausgebildete, Kugelbahnen am Innenumfang der Spindelmutter 6 ein.

Wichtig bei der Erfindung ist also, dass bezüglich der Frontansicht des Gehäuses in Figur 2 die Höhe 23 sehr gering ausgebildet ist. Diese Frontansicht ist in Figur 2 mit 24 gekennzeichnet.

Ebenso ist wichtig, dass auch in Richtung der Längsachse 25 eine relativ geringe Baulänge erreicht wird.

Die Minimierung der Höhe 23 erfolgt also durch die erwähnte Kugelumlaufspindel, die als bevorzugtes Untersetzungsglied gleichzeitig mit einem Federspeicher kombiniert ist, so dass ein Flügeltürantrieb mit Federspeicher auf engstem Raum realisiert werden kann.

### Zeichnungslegende

- 1: Motor
- 2: Motorritzel
- 3: Rippenband
- 4: Vorgelegerad
- 5: Kugelgewindespindel
- 6: Spindelmutter
- 7: Zahnstange
- 8: Abtriebswelle
- 9: Feder
- 10: Motorflansch
- 11: Lagerflansch
- 12: Flansch
- 13: Gehäuseprofil
- 14: Zahnstangenführung
- 15: Federführung
- 16: Anschlag zu
- 17: Anschlag offen
- 18: Ritzel
- 19: Kugelbahn
- 20: Kugel
- 21: Drehrichtung
- 22: Pfeilrichtung
- 23: Höhe
- 24: Frontseite
- 25: Längsachse

## Patentansprüche

1. Flügeltürantrieb mit Federschliessung, wobei eine Flügeltür mittels Motor (1) geöffnet und mittels Federkraft eines Federspeichers (9) geschlossen wird, wobei auf einer drehend angetriebenen Kugelumlaufspindel (5) eine Spindelmutter (6) mit Zahnstange (7) axial verschiebbar geführt ist, die gegen die Last des Federspeichers (9) arbeitet und die Zahnstange (7) mit einem Ritzel (18) kämmt, welches seinerseits drehfest mit einem Antriebsgestänge für den Flügeltürantrieb verbunden ist, und wobei der Federspeicher (9) unmittelbar die Kugelumlaufspindel (5) umgibt und wobei der Motor (1) versetzt neben der Kugelumlaufspindel (5) angeordnet ist.

2. Flügelantrieb nach Anspruch 1, **dadurch gekennzeichnet, dass** die Kraftwirkung des Federspeichers (9) durch das Zuschalten des Motors (1) verstärkt wird.

3. Flügeltürantrieb nach einem der Ansprüche 1 oder 2, **dadurch gekennzeichnet, dass** als Federspeicher (9) eine Schraubendruckfeder, Zugfeder, Drehfeder, Schenkelfeder oder Gasdruckfeder verwendet wird.

4. Flügeltürantrieb nach Anspruch 3, **dadurch gekennzeichnet, dass** die Schraubendruckfeder (9) an ihrem einen Ende mit der auf der einen Seite der Kugelgewindespindel (5) angeordneten Spindelmutter (6) anliegt, während das andere Ende an einem gehäusefesten Lagerflansch (11) aufliegt.

5. Flügeltürantrieb nach einem der Ansprüche 1 bis 4, **dadurch gekennzeichnet, dass** zwei parallel nebeneinander arbeitende und synchron von dem einzigen Motor (1) angetriebene Kugelumlaufspindein (5) verwendet werden.

6. Flügeltürantrieb nach einem der Ansprüche 1 bis 5, **dadurch gekennzeichnet, dass** die Anordnung des Flügeltürantriebs gespiegelt ausgebildet ist, um beispielsweise mit der rechten Antriebsanordnung den rechten Türflügel und mit der linken Antriebsanordnung den linken Türflügel anzutreiben.

7. Flügeltürantrieb nach einem der Ansprüche 1 bis 6, **dadurch gekennzeichnet, dass** der Motor (1) die Kugelumlaufspindel (5) über ein Untersetzungsgetriebe (2-4) antreibt.

8. Flügeltürantrieb nach einem der Ansprüche 1 bis 7, **dadurch gekennzeichnet, dass** das Untersetzungsgetriebe (2-4) als Riemengetriebe ausgebildet ist.

9. Flügeltürantrieb nach Anspruch 8, **dadurch gekennzeichnet, dass** das Riemengetriebe (2-4) drehfest mit einer Motorabtriebswelle (8) verbundenen ist, und ein Motorritzel (2) aufweist, auf das ein Rippenband (3) gelegt ist, welches über ein im Durchmesser vergrößertes Vorgelegerad (4) arbeitet, welches seinerseits drehfest mit der Kugelumlaufspindel (5) verbunden ist.

10. Flügeltürantrieb nach einem der Ansprüche 1 bis 9, **dadurch gekennzeichnet, dass** die Kugelumlaufspindel (5) als Trapezspindel ausgebildet ist.

## Claims

1. Swing or folding door drive with spring closing, wherein a swing or folding door is opened by means of a motor (1) and closed by the force of a spring (9), wherein a recirculating ball nut (6) with a rack (7) is axially displaceably guided on a recirculating ball screw (5) and works against the load of the spring (9) and the rack (7) meshes with a pinion (18) which in turn is connected fixedly in rotation to a drive rod for the door drive, and wherein the spring (9) immediately surrounds the recirculating ball screw (5) and wherein the motor (1) is offset and located beside the recirculating ball screw (5).

2. Swing or folding [door] drive according to Claim 1, **characterized in that** the force of the spring (9) is boosted by energizing the motor (1).

3. Swing or folding door drive according to Claim 1 or Claim 2, **characterized in that** a helical compression spring, tension spring, torsion spring, leg spring or gas pressure spring is used as the spring (9).

4. Swing or folding door drive according to Claim 3, **characterized in that** the helical compression spring (9) bears at one end [on] the recirculating ball nut (6) arranged on one end of the recirculating ball screw (5), while the other end rests on a bearing flange (11) that is fixed with respect to the casing.

5. Swing or folding door drive according to any one of Claims 1 to 4, **characterized in that** two recirculating ball screws (5) working parallel and side by side, and driven in synchronism by the single motor (1), are used.

6. Swing or folding door drive according to any one of Claims 1 to 5, **characterized in that** the arrangement of the door drive is mirror-inverted, e.g. to drive the right-hand door-leaf with the right-hand drive-arrangement, and the left-hand door-leaf with the left-hand drive-arrangement.

7. Swing or folding door drive according to any one of Claims 1 to 6, **characterized in that** the motor (1) drives the recirculating ball screw (5) through a reduction gear (2-4).

8. Swing or folding door drive according to any one of claims 1 to 7, **characterized in that** the reduction gear (2-4) is configured as a belt transmission.

9. Swing or folding door drive according to Claim 8, **characterized in that** the belt transmission (2-4) is connected fixedly in rotation to a motor output shaft (8) and has a motor pinion (2) which carries a ribbed belt (3) which operates a layshaft gear (4) of increased diameter which in turn is connected fixedly in rotation to the recirculating ball screw (5).

10. Swing or folding door drive according to any one of Claims 1 to 9, **characterized in that** the recirculating ball screw (5) has a trapezoidal thread.

## Revendications

1. Mécanisme d'entraînement de portes à battants avec un dispositif de fermeture à ressort, dans lequel un battant de porte s'ouvre grâce à un moteur (1) et se ferme grâce à l'action élastique d'un accumulateur à ressort (9), dans lequel il est prévu sur une vis à billes (5) entraînée en rotation un écrou de vis (6) qui est pourvu d'une crémaillère (7), qui est mobile axialement et qui travaille à l'encontre de la charge dé l'accumulateur à ressort (9), et la crémaillère (7) s'engrène avec un pignon (18) qui est lui-même relié, fixe en rotation, à une tringlerie d'entraînement pour l'entraînement de la porte à battants, dans lequel l'accumulateur à ressort (9) entoure directement la vis à billes (5) et dans lequel le moteur (1) est décalé par rapport à la vis à billes (5).

2. Mécanisme d'entraînement de portes à battants selon la revendication 1, **caractérisé en ce que** l'action dynamique de l'accumulateur à ressort (9) est renforcée par la mise en circuit du moteur (1).

3. Mécanisme d'entraînement de portes à battants selon la revendication 1 ou 2, **caractérisé en ce qu'**on utilise comme accumulateur à ressort (9) un ressort à boudin, un ressort de traction, un ressort de torsion, un ressort à branches ou un ressort pneumatique de pression.

4. Mécanisme d'entraînement de portes à battants selon la revendication 3, **caractérisé en ce que** le ressort à boudin (9) est en appui à une extrémité avec l'écrou (6) disposé sur un côté de la vis à billes (5) tandis que l'autre extrémité est posée sur une bride de palier (11) solidaire du carter.

5. Mécanisme d'entraînement de portes à battants selon l'une des revendications 1 à 4, **caractérisé en ce qu'**on utilise deux vis à billes (5) placées parallèlement côte à côte et entraînées de manière synchrone par le moteur unique (1).

6. Mécanisme d'entraînement de portes à battants selon l'une des revendications 1 à 5, **caractérisé en ce qu'**il est disposé en miroir afin d'entraîner par exemple le battant de porte droit avec le mécanisme de droite, et le battant gauche avec le mécanisme de gauche.

7. Mécanisme d'entraînement de portes à battants selon l'une des revendications 1 à 6, **caractérisé en ce que** le moteur (1) entraîne la vis à billes (5) par l'intermédiaire d'un démultiplicateur (2-4).

8. Mécanisme d'entraînement de portes à battants selon l'une des revendications 1 à 7, **caractérisé en ce que** le démultiplicateur (2-4) est conçu comme une transmission à courroie.

9. Mécanisme d'entraînement de portes à battants selon la revendication 8, **caractérisé en ce que** la transmission à courroie (2-4) est reliée, fixe en rotation, à un arbre de sortie de moteur (8) et comporte un pignon moteur (2) sur lequel est placée une courroie nervurée (3) qui tourne par l'intermédiaire d'un pignon de transmission intermédiaire (4) à diamètre plus grand qui est lui-même relié, fixe en rotation, à la vis à billes (5).

10. Mécanisme d'entraînement de portes à battants selon l'une des revendications 1 à 9, **caractérisé en ce que** la vis à billes (5) est conçue comme une vis trapézoïdale.
